(19)

Europäisches Patentamt
European Patent Office
Office européen des brevets

(11) **EP 4 501 691 A1**

(12) **EUROPEAN PATENT APPLICATION**
published in accordance with Art. 153(4) EPC

(43) Date of publication:
**05.02.2025 Bulletin 2025/06**

(21) Application number: **23807067.6**

(22) Date of filing: **19.05.2023**

(51) International Patent Classification (IPC):
**B60L 15/20** (2006.01)

(52) Cooperative Patent Classification (CPC):
**B60L 15/20; B60L 15/28;** Y02T 10/72

(86) International application number:
**PCT/CN2023/095326**

(87) International publication number:
**WO 2023/222118 (23.11.2023 Gazette 2023/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.05.2022 CN 202210551581**

(71) Applicant: **BYD Company Limited Shenzhen, Guangdong 518118 (CN)**

(72) Inventors:
• **LING, Heping**
  **Shenzhen, Guangdong 518118 (CN)**

• **SHI, Mingchuan**
  **Shenzhen, Guangdong 518118 (CN)**
• **YIN, Chao**
  **Shenzhen, Guangdong 518118 (CN)**
• **FU, Luo**
  **Shenzhen, Guangdong 518118 (CN)**
• **YUAN, Yuexu**
  **Shenzhen, Guangdong 518118 (CN)**

(74) Representative: **Taor, Simon Edward William et al**
  **Venner Shipley LLP**
  **200 Aldersgate**
  **London EC1A 4HD (GB)**

(54) **VEHICLE TORQUE CONTROL METHOD AND APPARATUS, AND ELECTRONIC DEVICE AND STORAGE MEDIUM**

(57) A vehicle torque control method. The method comprises: step 101, acquiring vehicle traveling parameters; step 102, determining a torque adjustment value of a driving shaft of a vehicle according to the vehicle traveling parameters; and step 103, adjusting the torque of the driving shaft of the vehicle according to the torque adjustment value, wherein the vehicle traveling parameters comprise wheel rotating speeds at two ends of the driving shaft of the vehicle. Further disclosed are a vehicle torque control apparatus, a vehicle and a storage medium. A torque adjustment value of each driving shaft of a vehicle is determined by means of wheel rotating speeds at two ends of the driving shaft of the vehicle, and torque adjustment is performed on all driving shafts of the vehicle, such that the torque adjustment is more comprehensive; and the torques of the driving shafts are adjusted in a linkage manner, such that a required power of the vehicle can be met while a slip state of the vehicle is eliminated, and thus the dynamic performance of the whole vehicle is improved.

| | |
|---|---|
| Acquire a vehicle driving parameter | 101 |
| Determine a torque adjustment value of a drive shaft of a vehicle based on the vehicle driving parameter | 102 |
| Adjust a torque of the drive shaft of the vehicle based on the torque adjustment value | 103 |

**FIG. 1**

**Description**

**CROSS-REFERENCE TO RELATED APPLICATIONS**

The present disclosure claims priority to Chinese Patent Application No. 202210551581.2, entitled "VEHICLE TORQUE CONTROL METHOD AND APPARATUS, ELECTRONIC DEVICE AND STORAGE MEDIUM" and filed on May 20, 2022 by BYD Co., Ltd.

**FIELD**

The present disclosure relates to the technical field of vehicles, and specifically, to a vehicle torque control method and apparatus, an electronic device and a storage medium.

**BACKGROUND**

During vehicle driving, a vehicle may be encountered with scenes such as turning and getting out of trouble. In these scenes, a torque of the vehicle often needs to be controlled, so that the vehicle can travel safely and smoothly. However, at present, scene recognition is often limited to a certain vehicle speed range, resulting in a lack of torque control conditions, and it is impossible to control the torque in a full-speed domain.

**SUMMARY**

The present disclosure is intended to solve one of the technical problems in the related art at least to some extent.
Therefore, the present disclosure provides a vehicle torque control method, a vehicle torque control apparatus, an electronic device and a storage medium.
The vehicle torque control method according to the present disclosure includes:
A vehicle driving parameter is acquired.
A torque adjustment value of a drive shaft of a vehicle is determined based on the vehicle driving parameter.
A torque of the drive shaft of the vehicle is adjusted based on the torque adjustment value.
The vehicle driving parameter includes wheel rotating speeds of wheels at two ends of the drive shaft of the vehicle.
Therefore, the torque adjustment value of each drive shaft of the vehicle is determined by the wheel rotating speeds of the wheels at both ends of the drive shaft of the vehicle, and torque adjustment is performed on each of the drive shafts of the vehicle, so that the torque adjustment is more comprehensive. The torques of the drive shafts are adjusted in a linkage manner, so that required power of the vehicle can be met while a slip state of the vehicle is eliminated, and therefore dynamic performance of the whole vehicle is improved.
The present disclosure further provides a vehicle torque control apparatus.
The present disclosure further provides an electronic device.
The present disclosure further provides a computer-readable storage medium.
The present disclosure further provides a vehicle.
Some of the additional aspects and advantages of the present disclosure are set forth in the following description, and some become apparent from the following description, or are learned by practice of the present disclosure.

**BRIEF DESCRIPTION OF THE DRAWINGS**

FIG. 1 is a step flowchart of a vehicle torque control method according to an embodiment of the present disclosure;
FIG. 2 is a step flowchart of a vehicle torque control method according to another embodiment of the present disclosure;
FIG. 3 is a schematic diagram of a vehicle steering model according to the present disclosure;
FIG. 4 is a schematic diagram of a two-degree-of-freedom dynamic model of a vehicle according to the present disclosure; and
FIG. 5 is a structural block diagram of a vehicle torque control apparatus according to an embodiment of the present disclosure.

## DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary, and are intended to explain the present disclosure and cannot be construed as a limitation to the present disclosure.

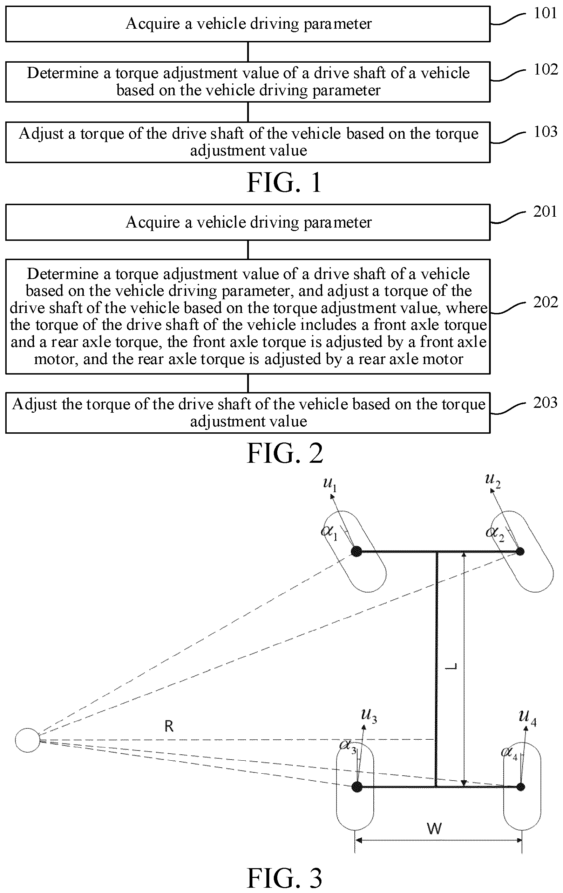

FIG. 1 is a step flowchart of a vehicle torque control method according to an embodiment of the present disclosure, which may specifically include the following steps.

Step 101: A vehicle driving parameter is acquired. The vehicle driving parameter includes wheel rotating speeds of wheels at two ends of a drive shaft of a vehicle.

In the embodiment of the present disclosure, various sensors, such as a wheel speed sensor for detecting a wheel rotating speed, a resolver sensor for detecting a rotating speed of a motor, a turning angle sensor for detecting a steering wheel turning angle, a vehicle speed sensor for detecting a vehicle speed and a yaw rate sensor for detecting a vehicle yaw rate, are mounted on the vehicle.

After the vehicle is powered on, signals sent by various sensors including the wheel speed sensor are read to acquire a vehicle driving parameter. The vehicle driving parameter includes at least wheel rotating speeds of wheels at two ends of the drive shaft of the vehicle. Step 102: A torque adjustment value of the drive shaft of the vehicle is determined based on the vehicle driving parameter.

After a corresponding vehicle driving parameter is obtained, a driving condition of the vehicle is determined based on the vehicle driving parameter, and the torque adjustment value of the drive shaft of the vehicle is calculated based on the vehicle driving parameter. For example, when the vehicle includes a front axle and a rear axle, which are two drive shafts of the vehicle, a torque adjustment value corresponding to the front axle and a torque adjustment value corresponding to the rear axle are calculated.

Step 103: A torque of the drive shaft of the vehicle is adjusted based on the torque adjustment value.

Different adjustment policies are determined based on torque adjustment values corresponding to different drive shafts of the vehicle, and each of the drive shafts of the whole vehicle is correspondingly adjusted based on the adjustment policies.

In the embodiment of the present disclosure, a vehicle driving parameter is acquired. A torque adjustment value of a drive shaft of a vehicle is determined based on the vehicle driving parameter. A torque of the drive shaft of the vehicle is adjusted based on the torque adjustment value. The vehicle driving parameter includes wheel rotating speeds of wheels at two ends of the drive shaft of the vehicle. The torque adjustment value of each drive shaft of the vehicle is determined by the wheel rotating speeds of the wheels at both ends of the drive shaft of the vehicle, and torque adjustment on the drive shaft is not limited to a fixed vehicle driving speed range, and the torque of the drive shaft can be adjusted in a full-speed range, so that a control condition of torque control is more comprehensive. Drive shaft torque adjustment is not limited to adjustment of a single drive shaft only. By adjustment of each of drive shafts on the vehicle, the torque of the drive shaft is adjusted more comprehensively, and double-shaft closed-loop control is implemented, thereby avoiding power consumption, so that vehicle slip control can be implemented in a full-domain range.

FIG. 2 is a step flowchart of a vehicle torque control method according to an embodiment of the present disclosure, which may specifically include the following steps.

Step 201: A vehicle driving parameter is acquired. The vehicle driving parameter includes wheel rotating speeds of wheels at two ends of a drive shaft of a vehicle.

In practical application, a wheel speed sensor, a motor resolver sensor, a turning angle sensor and a yaw rate sensor may be mounted on the vehicle. A rotating speed of a driving motor can be acquired by the motor resolver sensor. Rotating speeds $\omega fl$, $\omega fr$, $\omega rl$ and $\omega rr$ of four wheels are acquired by wheel speed sensors of the four wheels. A steering wheel turning angle $\delta$ is acquired by the turning angle sensor. A yaw rate of the vehicle is acquired by the yaw rate sensor.

Step 202: A torque adjustment value of the drive shaft of the vehicle is determined based on the vehicle driving parameter. The torque adjustment value includes a first torque adjustment amount and a second torque adjustment amount.

After the vehicle driving parameter is obtained, an operating condition of the vehicle can be determined by the vehicle driving parameter based on a theoretical model of the vehicle, and the torque adjustment value of the drive shaft of the vehicle can be determined based on the operating condition. The torque adjustment value may specifically include a first torque adjustment amount and a second torque adjustment amount. It should be noted that the first torque adjustment amount is a torque adjustment amount determined based on a wheel speed difference between wheels on two sides of the vehicle drive shaft, and the second torque adjustment amount is a torque adjustment amount determined based on a yaw rate during turning of the vehicle. Adjustment is performed based on different parameters, so that vehicle slip can be better controlled.

That a torque adjustment value of the drive shaft of the vehicle is determined based on the vehicle driving parameter includes:

Substep S2021: An inter-wheel rotating speed ratio of wheels is calculated based on the wheel rotating speeds.

In the embodiment of the present disclosure, the inter-wheel rotating speed ratio of the wheels on both sides of the same drive shaft is calculated based on corresponding wheel rotating speeds of the wheels on both sides of the same drive shaft. The inter-wheel rotating speed ratio can be calculated with the wheel rotating speed of the wheel on one of the sides as a numerator and the wheel rotating speed of the other wheel as a denominator.

In an embodiment, under a vehicle turning condition, the wheel rotating speed includes: a high turning wheel speed and a low turning wheel speed. That an inter-wheel rotating speed ratio of wheels is calculated based on the wheel rotating speeds includes:

An equivalent high wheel speed corresponding to the high turning wheel speed is calculated, and an equivalent low wheel speed corresponding to the low turning wheel speed is calculated.

The equivalent high wheel speed is divided by the equivalent low wheel speed to generate the inter-wheel rotating speed ratio.

Of course, the equivalent low wheel speed may alternatively be divided by the equivalent high wheel speed.

In practical application, an equivalent wheel speed can be calculated by a vehicle steering model and a yaw rate, that is, the equivalent wheel speed is a rotating speed of a wheel in a vehicle driving direction without an impact of a steering factor being removed. The vehicle steering model is used to convert the high turning wheel speed and the low turning wheel speed obtained from a signal from the wheel speed sensor, to calculate the equivalent high wheel speed corresponding to the high turning wheel speed and the equivalent low wheel speed corresponding to the low turning wheel speed.

FIG. 3 is a schematic diagram of a vehicle steering model according to the present disclosure. Equivalent wheel speeds of four wheels are calculated based on the following formulas:

With a rear inner wheel as a reference wheel,
Equivalent coefficient of a rear outer wheel:

$$f_{ro} = (R+W/2)/(R-W/2) + Fac_{Ro}.$$

Equivalent coefficient of a front inner wheel:

$$f_{fi} = \sqrt{(R-W/2)^2 + L^2}/(R-W/2) + Fac_{FI}.$$

Equivalent coefficient of a front outer wheel:

$$f_{fo} = \sqrt{(R+W/2)^2 + L^2}/(R-W/2) + Fac_{FO}.$$

where a vehicle steering radius is $R = V_x^2/a_y + Fac_R$, $Fac_R$ is a steering radius correction coefficient, $Fac_{Ro}$ is a correction coefficient of the rear outer wheel, $Fac_{FI}$ is a correction coefficient of the front inner wheel, $Fac_{FO}$ is a correction coefficient of the front outer wheel, W is a wheel tread between left and right wheels, L is a wheel base of front and rear axles, $V_x$ is a vehicle speed and $a_y$ is a lateral acceleration.

A yaw rate is defined as positive in rotating counterclockwise around a Z-axis of a vehicle coordinate system.

When the yaw rate is 0, an equivalent wheel speed of each wheel is equal to a wheel speed of the wheel.

When the yaw rate is greater than 0, a left rear wheel is the rear inner wheel and is defined as the reference wheel. When the yaw rate is less than 0, a right rear wheel is the rear inner wheel and is defined as the reference wheel. An equivalent wheel speed of the reference wheel is equal to an actual wheel speed, and the equivalent wheel speed of each of the remaining wheels is the actual wheel speed divided by the equivalent coefficient. An average of equivalent wheel speeds of both wheels of the same axle is used as an equivalent axle speed of this axle.

After an equivalent high turning wheel speed and an equivalent low turning wheel speed, the equivalent high wheel speed is divided by the equivalent low wheel speed to generate the inter-wheel rotating speed ratio. Specifically, when an equivalent wheel speed of a front left wheel is greater than an equivalent wheel speed of a front right wheel, a front axle inter-wheel rotating speed ratio is the equivalent wheel speed of the front left wheel divided by the equivalent wheel speed of the front right wheel, or when the equivalent wheel speed of the front left wheel is less than the equivalent wheel speed of the front right wheel, the front axle inter-wheel rotating speed ratio is the equivalent wheel speed of the front right wheel divided by the equivalent wheel speed of the front left wheel.

When an equivalent wheel speed of a rear left wheel is greater than an equivalent wheel speed of a rear right wheel, a rear axle inter-wheel rotating speed ratio is the equivalent wheel speed of the rear left wheel divided by the equivalent wheel speed of the rear right wheel, or when the equivalent wheel speed of the rear left wheel is less than the equivalent wheel speed of the rear right wheel, the rear axle inter-wheel rotating speed ratio is the equivalent wheel speed of the rear right wheel divided by the equivalent wheel speed of the rear left wheel.

Step S2022: The first torque adjustment amount is calculated when the inter-wheel rotating speed ratio is greater than a preset first threshold.

After the inter-wheel rotating speed ratio is calculated, the inter-wheel rotating speed ratio is compared with the preset first threshold. When the inter-wheel rotating speed ratio is greater than the preset first threshold, it is determined that there is a large wheel speed difference between left and right wheels of the vehicle, and it is determined that a current drive shaft is in a slipping state. An initial corresponding first torque adjustment amount is calculated. When the front axle is in a slipping state, the first torque adjustment amount is calculated from the front axle inter-wheel rotating speed ratio, and is defined as the front axle torque adjustment amount. When the rear axle is in a slipping state, the first torque adjustment amount is calculated from the rear axle inter-wheel rotating speed ratio, and is defined as a rear axle torque adjustment amount. The first threshold can be changed based on the vehicle speed. A reference value range of the first threshold is a closed interval [1.1,1.2].

In an embodiment, the first torque adjustment amount can be generated based on a preset torque formula.

In practical application, the preset torque formula may be a formula for calculating a torque based on a moment of inertia.

Specifically, the moment of inertia of the vehicle, $J = mr^2$ , can be first calculated, where $m$ is wheel mass, $r$ is a wheel rolling radius, and J is the moment of inertia of the vehicle.

After the moment of inertia is calculated, the first torque adjustment amount is calculated based on torque formulas:

$$u(k-1) = J * \frac{d\omega_2}{dt};$$

$$\Delta u(k) = A(e_k - e_{k-1}) + Be_k + C(e_k - 2e_{k-1} + e_{k-2});$$

and

$$u(k) = u(k-1) + \Delta u(k),$$

where k denotes a current time, J denotes a moment of inertia of a wheel, $\omega_2$ denotes an absolute value of a wheel speed difference between left and right wheels of the front axle or rear axle, A is a proportional coefficient, B is an integral coefficient, $C$ is a differential coefficient, $e_k$ denotes a difference in $\omega_2$ at different times, and $\Delta u(k)$ denotes an increment of the first torque adjustment amount.

In an embodiment, the vehicle driving parameter further includes: a vehicle speed, a steering wheel turning angle and a current yaw rate. The torque adjustment value further includes a second torque adjustment amount. That a torque adjustment value of a drive shaft of a vehicle is determined based on the vehicle driving parameter further includes: Substep S2023: An ideal yaw rate is determined based on the steering wheel turning angle and the vehicle speed.

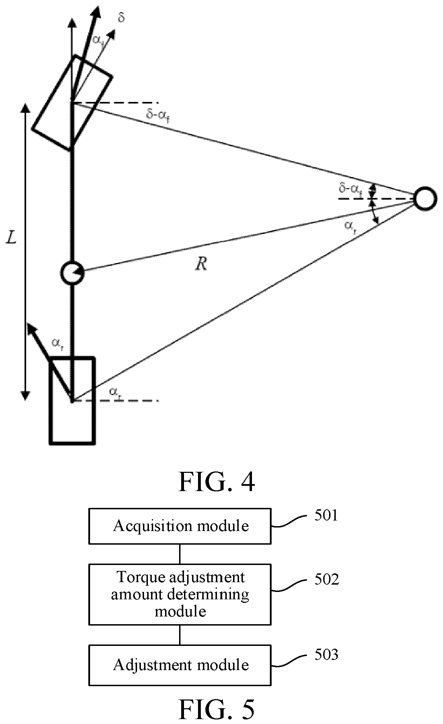

In the embodiment of the present disclosure, based on a two-degree-of-freedom dynamic model of the vehicle, the ideal yaw rate of the vehicle in a current driving state can be calculated based on the steering wheel turning angle and the vehicle speed obtained from the turning angle sensor. FIG. 4 is a schematic diagram of a two-degree-of-freedom dynamic model of a vehicle according to the present disclosure. Equations for calculating a related steering wheel turning angle are as follows:

$$\delta = \frac{l_f + l_r}{R} + K_V a_y;$$

$$K_V = \frac{l_r m}{2C_{af}(l_f + l_r)} - \frac{l_f m}{2C_{ar}(l_f + l_r)};$$

and

$$a_y = \frac{v_x^2}{R},$$

where $\delta$ is the steering wheel turning angle, $l_f$ is a distance between a vehicle center of mass and the front axle, $l_r$ is a distance between the vehicle center of mass and the rear axle, R is a vehicle steering radius, $a_y$ is a lateral acceleration of the vehicle, $m$ is mass of the whole vehicle, $C_{af}$ is cornering stiffness of a front wheel, $C_{ar}$ is cornering stiffness of a rear wheel, $v_x$ is a vehicle speed and $K_v$ is a stability factor.

A turning radius of the vehicle may be expressed as a function of the steering wheel turning angle:

$$\frac{1}{R} = \frac{\delta}{l_f + l_r + \dfrac{mv_x^2(l_r C_{ar} - l_f C_{af})}{2C_{af}C_{ar}(l_f + l_r)}}.$$

A target yaw rate is:

$$\omega_d = \frac{v_x}{R}.$$

The above two formulas are combined to obtain:

$$\omega_d = \frac{v_x \delta}{a + b + \dfrac{mv_x^2(\mathrm{b}C_{ar} - \mathrm{a}C_{af})}{2C_{af}C_{ar}(\mathrm{a}+\mathrm{b})}}.$$

A lateral acceleration at the center of mass is:

$$a_y = v_x \omega + \ddot{y},$$

where $\omega$ is the yaw rate of the vehicle, a is a distance between the center of mass and the front axle, b is a distance between the center of mass and the rear axle, and y is a physical component related to a mass center sideslip angle,

From $\dot{y} = v_x \tan(\beta)$,
the lateral acceleration may be related to an actual yaw rate and the mass center sideslip angle as follows:

$$a_y = v_x \omega + \tan(\beta)\dot{v}_x + \frac{v_x \dot{\beta}}{\sqrt{1 + \tan^2(\beta)}},$$

where β is the mass center sideslip angle.

The lateral acceleration may be limited by a road surface friction coefficient:

$$a_y \leq \mu g,$$

where $\mu$ is the road surface friction coefficient and g is a gravity acceleration.

If it is assumed that the mass center sideslip angle of the vehicle and a derivative thereof are very small, the second and third terms in a solution formula of $a_y$ account for a small part of a total lateral acceleration only. Then a yaw rate

upper limit is:

$$\omega_{upper\_bound} = 0.85 \frac{\mu g}{\dot{x}},$$

where a coefficient of 0.85 is an empirical value, which allows the second and third terms in the solution formula of $a_y$ to account for 15% of the lateral acceleration. X denotes vehicle displacement.

Therefore, the ideal yaw rate can be obtained:

$$\omega_{tar} = sgn(\omega_d) \min \left\{ \begin{array}{c} |\omega_d| \\ \omega_{upper\_bound} \end{array} \right\}.$$

Substep S2024: The second torque adjustment amount is calculated based on the ideal yaw rate and the current yaw rate.

The ideal yaw rate is compared with the current yaw rate to obtain a deviation, and the second torque adjustment amount is calculated based on the deviation.

Specifically, that the second torque adjustment amount is calculated based on the ideal yaw rate and the current yaw rate includes:

A yaw rate difference between the current yaw rate and the ideal yaw rate is calculated. When an absolute value of the yaw rate difference is greater than a preset second threshold, the second torque adjustment amount is calculated based on the absolute value of the yaw rate difference.

In the present embodiment of the present disclosure, the yaw rate difference is obtained by subtracting the ideal yaw rate from the current yaw rate, and the absolute value of the yaw rate difference is determined. The absolute value of the yaw rate difference is compared with the preset second threshold. When the absolute value of the yaw rate difference is greater than the preset second threshold, it is determined that the vehicle is in a slipping state, and the second torque adjustment amount is calculated based on the absolute value of the yaw rate difference. A reference value range of the second threshold ranges from 0.05 rad/s to 0.1 rad/s.

Specifically, the second torque adjustment amount corresponding to the absolute value of the yaw rate difference may be calculated based on a proportional integral control (PI) control formula.

The PI control formula is as follows:

$$\Delta T = k_1 d_3 + k_2 (d_3 - d_{3i}),$$

where $\Delta T$ is a torque adjustment amount, $k_1$ and $k_2$ are calibrated amounts set based on requirements, ds is the yaw rate difference, and dsi denotes ds at a previous time. In practical application, the yaw rate difference is first calculated:

$$d_3 = \omega_{real} - \omega_{tar},$$

where $\omega_{real}$ is an actual yaw rate measured by a sensor.

The absolute value of the yaw rate difference is input into PI control to obtain the second torque adjustment amount. When the yaw rate difference is less than 0, it is determined that the second torque adjustment amount is a torque transferred from the front axle to the rear axle, or when the yaw rate difference is greater than 0, it is determined that the second torque adjustment amount is a torque transferred from the rear axle to the front axle.

Step 203: A torque of the drive shaft of the vehicle is adjusted based on the torque adjustment value, where the torque of the drive shaft of the vehicle includes a front axle torque and a rear axle torque. The front axle torque is adjusted by a front axle motor, and the rear axle torque is adjusted by a rear axle motor.

In the practical application process, based on the first torque adjustment amount and the second torque adjustment amount, the front axle torque is adjusted by the front axle motor, and the rear axle torque is adjusted by the rear axle motor to adjust the drive shaft torque. Adjustment is performed when any axle slips, so as to restrain or reduce the vehicle slip.

Specifically, the front axle torque may be adjusted based on the front axle torque adjustment amount, or the rear axle torque is adjusted based on the rear axle torque adjustment amount.

In practical application, it can be determined that there is a requirement for torque reduction of the front axle based on the front axle torque adjustment amount, and the front axle torque can be adjusted based on the front axle torque adjustment amount. It can be determined that there is a requirement for torque reduction of the rear axle based on the rear axle torque adjustment amount, and the rear axle torque can be adjusted based on the rear axle torque adjustment amount.

Specifically, that a torque of the drive shaft of the vehicle is adjusted based on the torque adjustment value may include:

Substep S2031: When the front axle torque adjustment amount is not 0, the rear axle torque adjustment amount is 0 and during the whole torque adjustment, a current torque output value of the rear axle motor is less than a preset torque peak value of the rear axle motor, the front axle motor is controlled to reduce the front axle torque adjustment amount, and the rear axle motor is controlled to increase a torque.

In practical application, when the front axle torque adjustment amount is not 0, the rear axle torque adjustment amount is 0 and the current torque output value of the rear axle motor is less than the preset torque peak value of the rear axle motor, the front axle torque can be transferred to the rear axle in a certain step size. The step size is obtained by looking up a table based on an actual output torque of a current motor, and the step size does not exceed a torque adjustment amount of a current cycle obtained above. During torque transfer, the front axle motor is controlled to reduce the front axle torque adjustment amount, and the rear axle motor is controlled to increase the torque corresponding to the front axle torque adjustment amount. Requirements for a total torque of the front axle and the rear axle are unchanged in the whole process, so as to keep the vehicle in a large output torque state and meet dynamic performance of the vehicle. In addition, vehicle slip can be reduced or restrained.

In addition, during torque transfer, the current torque output value of the rear axle motor is obtained in real time, and a rear axle motor torque difference between the preset torque peak value of the rear axle motor and the current torque output value of the rear axle motor is calculated to determine whether the rear axle motor reaches an output limit after the rear axle motor torque difference is determined.

When the rear axle torque adjustment amount is less than or equal to the rear axle motor torque difference, it can be determined that the rear axle motor can increase the torque corresponding to the rear axle torque adjustment amount, and the rear axle motor torque is controlled to increase the torque corresponding to the front axle torque adjustment amount.

When the rear axle torque adjustment amount is greater than the rear axle motor torque difference, during increasing of the torque of the rear axle motor, the rear axle motor reaches a torque output peak value, and the rear axle motor is controlled to increase the torque corresponding to the rear axle motor torque difference.

Substep S2032: When the front axle torque adjustment amount is 0, the rear axle torque adjustment amount is not 0 and a current torque output value of the front axle motor is less than a preset torque peak value of the front axle motor, the rear axle motor is controlled to reduce the rear axle torque adjustment amount, and the front axle motor is controlled to increase a torque.

In practical application, when the front axle torque adjustment amount is 0, the rear axle torque adjustment amount is not 0 and the current torque output value of the rear axle motor is less than the preset torque peak value of the rear axle motor, the rear axle torque can be transferred to the front axle in a certain step size. The step size is obtained by looking up a table based on an actual output torque of a current motor, and the step size does not exceed a torque adjustment amount of a current cycle obtained above. During torque transfer, the rear axle motor is controlled to reduce the rear axle torque adjustment amount, and the front axle motor is controlled to increase the torque corresponding to the rear axle torque adjustment amount. Requirements for a total torque of the front axle and the rear axle are unchanged in the whole process, so as to keep the vehicle in a large output torque state and meet dynamic performance of the vehicle. In addition, vehicle slip can be restrained or reduced.

In addition, during torque transfer, the current torque output value of the front axle motor is obtained in real time, and a front axle motor torque difference between the preset torque peak value of the front axle motor and the current torque output value of the front axle motor is calculated to determine, by the front axle motor torque difference, whether the front axle motor reaches an output limit.

When the front axle torque adjustment amount is less than or equal to the front axle motor torque difference, it can be determined that the front axle motor can increase the torque corresponding to the rear axle torque adjustment amount, and the front axle motor torque is controlled to increase the torque corresponding to the rear axle torque adjustment amount.

When the front axle torque adjustment amount is greater than the front axle motor torque difference, during increasing of the torque of the front axle motor, the front axle motor reaches a torque output peak value, and the front axle motor is controlled to increase the torque corresponding to the front axle motor torque difference.

Substep S2033: When the front axle torque adjustment amount is not 0 and the rear axle torque adjustment amount is not 0, the front axle motor to reduce the front axle torque adjustment amount, and the rear axle motor is controlled to reduce the rear axle torque adjustment amount.

In practical application, when the front axle torque adjustment amount is not 0 and the rear axle torque adjustment amount is not 0, torque reduction of the front axle/rear axle is performed in a certain step size until there is no torque reduction requirement. The step size is obtained by looking up a table based on the actual output torque of the current motor. A required total torque is reduced in the process.

In an embodiment of the present disclosure, the method further includes: Step S1: The rear axle motor is controlled to reduce the second torque adjustment amount if the second torque adjustment amount is greater than 0.

In the embodiment of the present disclosure, when the second torque adjustment amount exists, the torque of the drive shaft can be adjusted based on a wheel speed difference. when the second torque adjustment amount is greater than 0, the rear axle motor is controlled to reduce the second torque adjustment amount, that is, the rear axle motor is controlled to reduce the torque corresponding to the second torque adjustment amount.

Step S2: The front axle motor is controlled to reduce the second torque adjustment amount if the second torque adjustment amount is less than 0.

Correspondingly, the front axle motor is controlled to reduce the second torque adjustment amount when the second torque adjustment amount is less than 0.

In an embodiment of the present disclosure, that a torque of the drive shaft of the vehicle is adjusted based on the torque adjustment value includes:

Substep S2034: The front axle torque and/or the rear axle torque is adjusted based on the front axle torque adjustment amount, the rear axle torque adjustment amount and the second torque adjustment amount.

In the embodiment of the present disclosure, a composite torque adjustment amount can be obtained by combining the front axle torque adjustment amount, the rear axle torque adjustment amount and the second torque adjustment amount, to adjust at least one of the front axle torque and the rear axle torque, so that slipping of the vehicle can be better controlled.

Specifically, step S3: If the second torque adjustment amount is greater than 0, the front axle torque adjustment amount is not 0 and the rear axle torque adjustment amount is 0, the front axle motor is controlled to reduce the front axle torque adjustment amount, and the rear axle motor is controlled to reduce the second torque adjustment amount.

When the second torque adjustment amount is greater than 0, the front axle torque adjustment amount is not 0 and the rear axle torque adjustment amount is 0, it can be determined that there are requirements for torque reduction of the front axle and the rear axle, and the second torque adjustment amount is a torque transferred from the rear axle to the front axle. The front axle motor is controlled to reduce the front axle torque adjustment amount, and the rear axle motor is controlled to reduce the second torque adjustment amount.

Step S4: If the second torque adjustment amount is greater than 0, the front axle torque adjustment amount is 0 and the rear axle torque adjustment amount is not 0, the rear axle motor is controlled to reduce a first composite torque adjustment amount, where the first composite torque adjustment amount = $k_1$ * the rear axle torque adjustment amount + $k_2$ * the second torque adjustment amount.

When the second torque adjustment amount is greater than 0, the front axle torque adjustment amount is 0 and the rear axle torque adjustment amount is not 0, that is, there are requirements for torque reduction of the rear axle, a sum of $k_1$ * the rear axle torque adjustment amount and $k_2$ * the second torque adjustment amount is calculated as the first composite torque adjustment amount, the rear axle motor is controlled to reduce the first composite torque adjustment amount, and the front axle increases the second torque adjustment amount.

$k_1$ and $k_2$ are torque distribution coefficients, and can be set based on requirements or calibrated based on an experiment.

Step S5: If the second torque adjustment amount is less than 0, the front axle torque adjustment amount is 0 and the rear axle torque adjustment amount is not 0, the front axle motor is controlled to reduce the second torque adjustment amount, and the rear axle motor is controlled to reduce the rear axle torque adjustment amount, or

when the second torque adjustment amount is less than 0, the front axle torque adjustment amount is 0 and the rear axle torque adjustment amount is not 0, it can be determined that there are requirements for torque reduction of the front axle and the rear axle, and the second torque adjustment amount is a torque transferred from the rear axle to the front axle. The front axle motor is controlled to reduce the second torque adjustment amount, and the rear axle motor is controlled to reduce the rear axle torque adjustment amount.

Step S6: The front axle motor is controlled to reduce a second composite torque adjustment amount if the second torque adjustment amount is less than 0, the front axle torque adjustment amount is not 0 and the rear axle torque adjustment amount is 0, where the second composite torque adjustment amount = $k_3$ * the rear axle torque adjustment amount + $k_4$ * the second torque adjustment amount.

When the second torque adjustment amount is less than 0, the front axle torque adjustment amount is not 0 and the rear axle torque adjustment amount is 0, that is, there are requirements for torque reduction of the front axle, a sum of $k_3$ * the front axle torque adjustment amount and $k_4$ * the second torque adjustment amount is calculated as the second composite torque adjustment amount, the front axle motor is controlled to reduce the second composite torque adjustment amount, and the rear axle increases the second composite torque adjustment amount. $k_3$ and $k_4$ are torque distribution coefficients, and can be set based on requirements or calibrated based on an experiment.

In the embodiment of the present disclosure, a vehicle driving parameter is acquired. A torque adjustment value of a drive shaft of a vehicle is determined based on the vehicle driving parameter. A torque of the drive shaft of the vehicle is adjusted based on the torque adjustment value. The vehicle driving parameter includes wheel rotating speeds of wheels at two ends of a drive shaft of a vehicle. The torque adjustment value of each drive shaft of the vehicle is determined by the wheel rotating speeds of the wheels at both ends of the drive shaft of the vehicle, and torque adjustment on the drive shaft is not limited to a fixed vehicle driving speed range, so that double-shaft closed-loop torque transfer is performed in a full-speed domain range. Therefore, the adaptability range is wider, and a control condition of torque control is more comprehensive. Drive shaft torque adjustment is not limited to adjustment of a single drive shaft only. By adjustment of each of drive shafts on the vehicle, the torque of the drive shaft is adjusted more comprehensively. The torque can be transferred between the front axle and the rear axle, so that requirements for the torque of the whole vehicle are unchanged while the wheel slipping is eliminated, thereby avoiding power consumption and improving dynamic performance of the vehicle. In each of slipping states of wheels, instead of simply reducing the torque, the slipping is eliminated by torque transfer, so that required power of the vehicle can be met while the unstable slipping state of the vehicle is eliminated, and therefore dynamic performance of the whole vehicle is improved.

It should be noted that for simplicity of description, the method embodiments are expressed as a series of action combinations, but a person skilled in the art should be aware that the embodiments of the present disclosure are not limited by the described action sequence, because according to embodiments of the present disclosure, certain steps may be performed in other sequences or simultaneously.

FIG. 5 is a step flowchart of a vehicle torque control apparatus according to an embodiment of the present disclosure, which may specifically include the following modules:

An acquisition module 501, configured to acquire a vehicle driving parameter;
a torque adjustment amount determining module 502, configured to determine a torque adjustment value of a drive shaft of a vehicle based on the vehicle driving parameter; and
an adjustment module 503, configured to adjust a torque of the drive shaft of the vehicle based on the torque adjustment value,
The vehicle driving parameter includes wheel rotating speeds of wheels at two ends of a drive shaft of a vehicle.

In an embodiment, the torque adjustment value includes a first torque adjustment amount,
where the torque adjustment amount determining module 502 includes:

a first calculation submodule, configured to calculate an inter-wheel rotating speed ratio of wheels based on the wheel rotating speeds; and
a second calculation submodule, configured to calculate the first torque adjustment amount when the inter-wheel rotating speed ratio is greater than a preset first threshold.

In an embodiment, the vehicle driving parameter further includes: a vehicle speed, a steering wheel turning angle and a current yaw rate. The torque adjustment value further includes a second torque adjustment amount. The torque adjustment amount determining module 502 further includes:

a third calculation submodule, configured to determine an ideal yaw rate based on the steering wheel turning angle and the vehicle speed; and
a fourth calculation submodule, configured to calculate the second torque adjustment amount based on the ideal yaw rate and the current yaw rate.

In an embodiment, under a vehicle turning condition, the wheel rotating speed includes: a high turning wheel speed and a low turning wheel speed, where the first calculation submodule includes:

a first calculation unit, configured to calculate an equivalent high wheel speed corresponding to the high turning wheel speed, and calculate an equivalent low wheel speed corresponding to the low turning wheel speed; and
a second calculation unit, configured to divide the equivalent high wheel speed by the equivalent low wheel speed to generate the inter-wheel rotating speed ratio.

In an embodiment, the second calculation submodule includes:

a third calculation unit, configured to calculate an equivalent wheel speed difference based on the equivalent high wheel speed and the equivalent low wheel speed; and
a fourth calculation unit, configured to generate the first torque adjustment amount based on a preset torque formula.

In an embodiment, the fourth calculation submodule includes:

a fifth calculation unit, configured to calculate a yaw rate difference between the current yaw rate and the ideal yaw rate; and

a sixth calculation unit, configured to calculate, when an absolute value of the yaw rate difference is greater than a preset second threshold, the second torque adjustment amount based on the absolute value of the yaw rate difference.

In an embodiment, the sixth calculation unit includes:

a first calculation subunit, configured to calculate the second torque adjustment amount corresponding to the absolute value of the yaw rate difference based on a PI control formula.

In an embodiment, the torque of the drive shaft of the vehicle includes a front axle torque, and the first torque adjustment amount includes a front axle torque adjustment amount,

where the adjustment module 503 includes:

a first adjustment submodule, configured to adjust the front axle torque based on the front axle torque adjustment amount,

or

the torque of the drive shaft of the vehicle includes a rear axle torque, and the first torque adjustment amount includes a rear axle torque adjustment amount,

where the adjustment module 503 includes:

a second adjustment submodule, configured to adjust the rear axle torque based on the rear axle torque adjustment amount.

In an embodiment, the torque of the drive shaft of the vehicle includes a front axle torque and a rear axle torque, and the front axle torque is adjusted by a front axle motor. The rear axle torque is adjusted by a rear axle motor. The first torque adjustment amount includes a front axle torque adjustment amount and a rear axle torque adjustment amount. The adjustment module 503 includes:

a second adjustment submodule, configured to control, when the front axle torque adjustment amount is not 0, the rear axle torque adjustment amount is 0 and a current torque output value of the rear axle motor is less than a preset torque peak value of the rear axle motor, the front axle motor to reduce the front axle torque adjustment amount, and control the rear axle motor to increase a torque.

In an embodiment, the second adjustment submodule includes:

a first acquisition unit, configured to acquire a rear axle motor torque difference between the preset torque peak value of the rear axle motor and the current torque output value of the rear axle motor;

a first adjustment unit, configured to control the rear axle motor torque to increase the front axle torque adjustment amount when the front axle torque adjustment amount is less than or equal to the rear axle motor torque difference; and

a second adjustment unit, configured to control the rear axle motor torque to increase the rear axle motor torque difference when the front axle torque adjustment amount is greater than the rear axle motor torque difference.

In an embodiment, the torque of the drive shaft of the vehicle includes a front axle torque and a rear axle torque, and the front axle torque is adjusted by a front axle motor. The rear axle torque is adjusted by a rear axle motor. The first torque adjustment amount includes a front axle torque adjustment amount and a rear axle torque adjustment amount. The adjustment module 503 includes:

a third adjustment submodule, configured to control, when the front axle torque adjustment amount is 0, the rear axle torque adjustment amount is not 0 and a current torque output value of the front axle motor is less than a preset torque peak value of the front axle motor, the rear axle motor to reduce the rear axle torque adjustment amount, and control the front axle motor to increase a torque.

In an embodiment, the third adjustment submodule includes:

a second acquisition unit, configured to acquire a front axle motor torque difference between the preset torque peak value of the front axle motor and the current torque output value of the front axle motor;

a third adjustment unit, configured to control the front axle motor torque to increase the rear axle torque adjustment amount when the rear axle torque adjustment amount is less than or equal to the front axle motor torque difference; and

a fourth adjustment unit, configured to control the front axle motor torque to increase the front axle motor torque difference when the rear axle torque adjustment amount is greater than the front axle motor torque difference.

In an embodiment, the torque of the drive shaft of the vehicle includes a front axle torque and a rear axle torque, and the front axle torque is adjusted by a front axle motor. The rear axle torque is adjusted by a rear axle motor. The first torque adjustment amount includes a front axle torque adjustment amount and a rear axle torque adjustment amount. The adjustment module 503 includes:
a fourth adjustment submodule, configured to control, when the front axle torque adjustment amount is not 0 and the rear axle torque adjustment amount is not 0, the front axle motor to reduce the rear axle torque adjustment amount, and control the rear axle motor to reduce the rear axle torque adjustment amount.

In an embodiment, the torque of the drive shaft of the vehicle includes a front axle torque and a rear axle torque. The front axle torque is adjusted by a front axle motor, and the rear axle torque is adjusted by a rear axle motor.

The apparatus further includes:

a rear axle adjustment module, configured to control the rear axle motor to reduce the second torque adjustment amount if the second torque adjustment amount is greater than 0; and
a front axle adjustment module, configured to control the front axle motor to reduce the second torque adjustment amount if the second torque adjustment amount is less than 0.

In an embodiment, the rear axle torque is adjusted by a rear axle motor, and the first torque adjustment amount includes a front axle torque adjustment amount and a rear axle torque adjustment amount.

The adjustment module 503 includes:
a fourth adjustment submodule, configured to adjust the front axle torque and/or the rear axle torque based on the front axle torque adjustment amount, the rear axle torque adjustment amount and the second torque adjustment amount.

In an embodiment, the torque of the drive shaft of the vehicle includes a front axle torque and a rear axle torque. The front axle torque is adjusted by a front axle motor, and the rear axle torque is adjusted by a rear axle motor. The fourth adjustment submodule includes:

a first control unit, configured to control, if the second torque adjustment amount is greater than 0, the front axle torque adjustment amount is not 0 and the rear axle torque adjustment amount is 0, the front axle motor to reduce the front axle torque adjustment amount, and control the rear axle motor to reduce the second torque adjustment amount;
a second control unit, configured to control the rear axle motor to reduce a first composite torque adjustment amount if the second torque adjustment amount is greater than 0, the front axle torque adjustment amount is 0 and the rear axle torque adjustment amount is not 0, where the first composite torque adjustment amount = $k_1$ * the rear axle torque adjustment amount + $k_2$ * the second torque adjustment amount;
a third control unit, configured to control, if the second torque adjustment amount is less than 0, the front axle torque adjustment amount is 0 and the rear axle torque adjustment amount is not 0, the front axle motor to reduce the second torque adjustment amount, and control the rear axle motor to reduce the rear axle torque adjustment amount; and
a fourth control unit, configured to control the front axle motor to reduce a second composite torque adjustment amount if the second torque adjustment amount is less than 0, the front axle torque adjustment amount is not 0 and the rear axle torque adjustment amount is 0, where the second composite torque adjustment amount = $k_3$ * the rear axle torque adjustment amount + $k_4$ * the second torque adjustment amount.

$k_1$, $k_2$, $k_3$ and $k_4$ are torque distribution coefficients.

Since the apparatus embodiment is substantially similar to the method embodiment, the description is relatively simple. For relevant parts, refer to the description of the method embodiment.

An embodiment of the present disclosure further discloses an electronic device, including a processor, a memory and a computer program stored in the memory and executable on the processor. The steps of the vehicle torque control method described above are implemented when the computer program is executed by the processor.

An embodiment of the present disclosure further discloses a computer-readable storage medium. The computer-readable storage medium stores a computer program. The steps of the vehicle torque control method described above are implemented when the computer program is executed by a processor.

An embodiment of the present disclosure further discloses a vehicle, including a front motor, a rear motor and a controller. The controller is configured to implement the steps of the vehicle torque control method described above.

The embodiments in this specification are described in a progressive manner, and the description of each embodiment focuses on differences from other embodiments. Mutual reference may be made to the same and similar parts of the embodiments.

A person skilled in the art should understand that, the embodiments of the present disclosure may be provided as methods, apparatuses, or computer program products. Therefore, the embodiments of the present disclosure may use a form of hardware-only embodiments, software-only embodiments, or embodiments in which software and hardware are combined. In addition, the embodiments of the present disclosure may use a form of a computer program product implemented on one or more computer-usable storage media (including but not limited to a disk memory, a compact disc read-only memory (CD-ROM) and an optical memory) including computer-usable program code.

The embodiments of the present disclosure are described with reference to flowcharts and/or block diagrams of the method, terminal device (system), and computer program product in the embodiments of the present disclosure. It should be understood that computer program instructions can implement each process and/or block in the flowcharts and/or block diagrams and a combination of processes and/or blocks in the flowcharts and/or block diagrams. These computer program instructions may be provided to a processor of a general purpose computer, a special purpose computer, an embedded processor or other programmable data processing terminal devices to produce a machine, so that the instructions executed by a processor of a computer or other programmable data processing terminal devices are used to produce an apparatus configured to implement functions specified in one or more processes of the flowcharts and/or one or more blocks of the block diagrams.

These computer program instructions may alternatively be stored in a computer-readable memory that can instruct a computer or other programmable data processing terminal devices to operate in a specific manner, so that the instructions stored in the computer-readable memory are used to produce a product including an instruction apparatus, and the instruction apparatus implements functions specified in one or more processes of the flowcharts and/or one or more blocks of the block diagrams.

These computer program instructions may alternatively be loaded on a computer or other programmable data processing terminal devices, so that a series of operation steps are performed on the computer or other programmable terminal devices to produce computer-implemented processing, and therefore the instructions executed on the computer or other programmable terminal devices are used to provide steps for implementing functions specified in one or more processes of the flowcharts and/or one or more blocks of the block diagrams.

Finally, it should be noted that relational terms herein such as "first" and "second" are merely used to distinguish one entity or operation from another entity or operation without necessarily requiring or implying any actual such relationship or order between such entities or operations. Moreover, the terms "include", "comprise" or any other variants thereof are intended to cover non-exclusive inclusion, so that a process, method, article or terminal device including a series of elements not only includes those elements, but also includes those elements that are not explicitly listed, or also includes elements inherent to this process, method, article or terminal device. Without further limitation, the element defined by the sentence "including a... " does not exclude that other identical elements are also present in the process, method, article or terminal device including the elements.

The vehicle torque control method and apparatus, the electronic device, and the storage medium according to the present disclosure are described above in detail. Although the principles and implementations of the present disclosure are described by applying specific examples herein, the descriptions of the above embodiments are merely intended to help understand the method and the core idea of the method according to the present disclosure. In addition, for a person of ordinary skill in the art, changes may be made to the specific implementations and application range based on the idea of the present disclosure. To sum up, the contents of this specification should not be construed as a limitation to the present disclosure.

**Claims**

1. A vehicle torque control method, comprising:

   acquiring a vehicle driving parameter;
   determining a torque adjustment value of a drive shaft of a vehicle based on the vehicle driving parameter; and
   adjusting a torque of the drive shaft of the vehicle based on the torque adjustment value,
   wherein the vehicle driving parameter comprises wheel rotating speeds of wheels at two ends of the drive shaft of the vehicle.

2. The method according to claim 1, wherein the torque adjustment value comprises a first torque adjustment amount, wherein the determining a torque adjustment value of a drive shaft of a vehicle based on the vehicle driving parameter comprises:

   calculating an inter-wheel rotating speed ratio of wheels based on the wheel rotating speeds; and
   calculating the first torque adjustment amount when the inter-wheel rotating speed ratio is greater than a preset first threshold.

**3.** The method according to claim 2, wherein the vehicle driving parameter further comprises: a vehicle speed, a steering wheel turning angle and a current yaw rate; the torque adjustment value further comprises a second torque adjustment amount; and the determining a torque adjustment value of a drive shaft of a vehicle based on the vehicle driving parameter further comprises:

determining an ideal yaw rate based on the steering wheel turning angle and the vehicle speed; and
calculating the second torque adjustment amount based on the ideal yaw rate and the current yaw rate.

**4.** The method according to claim 2, wherein under a vehicle turning condition, the wheel rotating speed comprises: a high turning wheel speed and a low turning wheel speed, wherein the calculating an inter-wheel rotating speed ratio of wheels based on the wheel rotating speeds comprises:

calculating an equivalent high wheel speed corresponding to the high turning wheel speed, and calculating an equivalent low wheel speed corresponding to the low turning wheel speed; and
dividing the equivalent high wheel speed by the equivalent low wheel speed to generate the inter-wheel rotating speed ratio.

**5.** The method according to claim 4, wherein the calculating the first torque adjustment amount comprises:

calculating an equivalent wheel speed difference based on the equivalent high wheel speed and the equivalent low wheel speed; and
generating the first torque adjustment amount based on a preset torque formula.

**6.** The method according to claim 3, wherein the calculating the second torque adjustment amount based on the ideal yaw rate and the current yaw rate comprises:

calculating a yaw rate difference between the current yaw rate and the ideal yaw rate; and
calculating, when an absolute value of the yaw rate difference is greater than a preset second threshold, the second torque adjustment amount based on the absolute value of the yaw rate difference.

**7.** The method according to claim 6, wherein the calculating the second torque adjustment amount based on the absolute value of the yaw rate difference comprises:
calculating the second torque adjustment amount corresponding to the absolute value of the yaw rate difference based on a PI control formula.

**8.** The method according to claim 2, wherein the torque of the drive shaft of the vehicle comprises a front axle torque, and the first torque adjustment amount comprises a front axle torque adjustment amount,
wherein the adjusting a torque of the drive shaft of the vehicle based on the torque adjustment value comprises:

adjusting the front axle torque based on the front axle torque adjustment amount,
or
the torque of the drive shaft of the vehicle comprises a rear axle torque, and the first torque adjustment amount comprises a rear axle torque adjustment amount,
wherein the adjusting a torque of the drive shaft of the vehicle based on the torque adjustment value comprises:
adjusting the rear axle torque based on the rear axle torque adjustment amount.

**9.** The method according to claim 2, wherein the torque of the drive shaft of the vehicle comprises a front axle torque and a rear axle torque, the front axle torque is adjusted by a front axle motor, the rear axle torque is adjusted by a rear axle motor, the first torque adjustment amount comprises a front axle torque adjustment amount and a rear axle torque adjustment amount, and the adjusting a torque of the drive shaft of the vehicle based on the torque adjustment value comprises:
controlling, when the front axle torque adjustment amount is not 0, the rear axle torque adjustment amount is 0 and a current torque output value of the rear axle motor is less than a preset torque peak value of the rear axle motor, the front axle motor to reduce the front axle torque adjustment amount, and controlling the rear axle motor to increase a torque.

**10.** The method according to claim 9, wherein the controlling the rear axle motor to increase a torque comprises:

acquiring a rear axle motor torque difference between the preset torque peak value of the rear axle motor and the current torque output value of the rear axle motor, and

controlling the rear axle motor torque to increase the front axle torque adjustment amount when the front axle torque adjustment amount is less than or equal to the rear axle motor torque difference, or

controlling the rear axle motor torque to increase the rear axle motor torque difference when the front axle torque adjustment amount is greater than the rear axle motor torque difference.

11. The method according to claim 2, wherein the torque of the drive shaft of the vehicle comprises a front axle torque and a rear axle torque, the front axle torque is adjusted by a front axle motor, the rear axle torque is adjusted by a rear axle motor, the first torque adjustment amount comprises a front axle torque adjustment amount and a rear axle torque adjustment amount, and the adjusting a torque of the drive shaft of the vehicle based on the torque adjustment value comprises:

controlling, when the front axle torque adjustment amount is 0, the rear axle torque adjustment amount is not 0 and a current torque output value of the front axle motor is less than a preset torque peak value of the front axle motor, the rear axle motor to reduce the rear axle torque adjustment amount, and controlling the front axle motor to increase a torque.

12. The method according to claim 11, wherein the controlling the front axle motor to increase a torque comprises:

acquiring a front axle motor torque difference between the preset torque peak value of the front axle motor and the current torque output value of the front axle motor, and

controlling the front axle motor torque to increase the rear axle torque adjustment amount when the rear axle torque adjustment amount is less than or equal to the front axle motor torque difference, or

controlling the front axle motor torque to increase the front axle motor torque difference when the rear axle torque adjustment amount is greater than the front axle motor torque difference.

13. The method according to claim 2, wherein the torque of the drive shaft of the vehicle comprises a front axle torque and a rear axle torque, the front axle torque is adjusted by a front axle motor, the rear axle torque is adjusted by a rear axle motor, the first torque adjustment amount comprises a front axle torque adjustment amount and a rear axle torque adjustment amount, and the adjusting a torque of the drive shaft of the vehicle based on the torque adjustment value comprises:

controlling, when the front axle torque adjustment amount is not 0 and the rear axle torque adjustment amount is not 0, the front axle motor to reduce the rear axle torque adjustment amount, and controlling the rear axle motor to reduce the rear axle torque adjustment amount.

14. The method according to claim 7, the torque of the drive shaft of the vehicle comprising a front axle torque and a rear axle torque, the front axle torque being adjusted by a front axle motor, and the rear axle torque being adjusted by a rear axle motor,

the method further comprising:

controlling the rear axle motor to reduce the second torque adjustment amount if the second torque adjustment amount is greater than 0, or

controlling the front axle motor to reduce the second torque adjustment amount if the second torque adjustment amount is less than 0.

15. The method according to claim 3, wherein the torque of the drive shaft of the vehicle comprises a front axle torque and a rear axle torque, the front axle torque is adjusted by a front axle motor, the rear axle torque is adjusted by a rear axle motor, and the first torque adjustment amount comprises a front axle torque adjustment amount and a rear axle torque adjustment amount,

wherein the adjusting a torque of the drive shaft of the vehicle based on the torque adjustment value comprises:

adjusting the front axle torque based on the front axle torque adjustment amount, the rear axle torque adjustment amount and the second torque adjustment amount,

or adjusting the rear axle torque based on the front axle torque adjustment amount, the rear axle torque adjustment amount and the second torque adjustment amount,

or adjusting the front axle torque and the rear axle torque based on the front axle torque adjustment amount, the rear axle torque adjustment amount and the second torque adjustment amount.

16. The method according to claim 15, wherein the torque of the drive shaft of the vehicle comprises a front axle torque and a rear axle torque, and the adjusting the front axle torque based on the front axle torque adjustment amount, the rear axle torque adjustment amount and the second torque adjustment amount, or adjusting the rear axle torque based on the front axle torque adjustment amount, the rear axle torque adjustment amount and the second torque adjustment amount, or adjusting the front axle torque and the rear axle torque based on the front axle torque adjustment amount, the rear axle torque adjustment amount and the second torque adjustment amount comprises:

controlling, if the second torque adjustment amount is greater than 0, the front axle torque adjustment amount is not 0 and the rear axle torque adjustment amount is 0, the front axle motor to reduce the front axle torque adjustment amount, and controlling the rear axle motor to reduce the second torque adjustment amount;

controlling the rear axle motor to reduce a first composite torque adjustment amount if the second torque adjustment amount is greater than 0, the front axle torque adjustment amount is 0 and the rear axle torque adjustment amount is not 0, wherein the first composite torque adjustment amount = $k_1$ * the rear axle torque adjustment amount + $k_2$ * the second torque adjustment amount, or

controlling, if the second torque adjustment amount is less than 0, the front axle torque adjustment amount is 0 and the rear axle torque adjustment amount is not 0, the front axle motor to reduce the second torque adjustment amount, and controlling the rear axle motor to reduce the rear axle torque adjustment amount, or

controlling the front axle motor to reduce a second composite torque adjustment amount if the second torque adjustment amount is less than 0, the front axle torque adjustment amount is not 0 and the rear axle torque adjustment amount is 0, wherein the second composite torque adjustment amount = $k_3$ * the rear axle torque adjustment amount + $k_4$ * the second torque adjustment amount,

wherein $k_1$, $k_2$, $k_3$ and $k_4$ are torque distribution coefficients.

17. A vehicle torque control apparatus, comprising:

an acquisition module, configured to acquire a vehicle driving parameter;

a torque adjustment amount determining module, configured to determine a torque adjustment value of a drive shaft of a vehicle based on the vehicle driving parameter; and

an adjustment module, configured to adjust a torque of the drive shaft of the vehicle based on the torque adjustment value,

wherein the vehicle driving parameter comprises wheel rotating speeds of wheels at two ends of the drive shaft of the vehicle.

18. A vehicle, comprising a processor, a memory and a computer program stored in the memory and executable on the processor, the steps of the vehicle torque control method according to any one of claims 1 to 16 being implemented when the computer program is executed by the processor.

19. A computer-readable storage medium storing a computer program, the steps of the vehicle torque control method according to any one of claims 1 to 16 being implemented when the computer program is executed by a processor.

20. A vehicle, comprising a front motor, a rear motor and a controller, the controller being configured to implement the steps of the vehicle torque control method according to any one of claims 1 to 16.

| Acquire a vehicle driving parameter | 101 |

| Determine a torque adjustment value of a drive shaft of a vehicle based on the vehicle driving parameter | 102 |

| Adjust a torque of the drive shaft of the vehicle based on the torque adjustment value | 103 |

FIG. 1

| Acquire a vehicle driving parameter | 201 |

| Determine a torque adjustment value of a drive shaft of a vehicle based on the vehicle driving parameter, and adjust a torque of the drive shaft of the vehicle based on the torque adjustment value, where the torque of the drive shaft of the vehicle includes a front axle torque and a rear axle torque, the front axle torque is adjusted by a front axle motor, and the rear axle torque is adjusted by a rear axle motor | 202 |

| Adjust the torque of the drive shaft of the vehicle based on the torque adjustment value | 203 |

FIG. 2

FIG. 3

FIG. 4

FIG. 5

## INTERNATIONAL SEARCH REPORT

| International application No. |
| --- |
| **PCT/CN2023/095326** |

**A. CLASSIFICATION OF SUBJECT MATTER**

B60L15/20(2006.01)i

According to International Patent Classification (IPC) or to both national classification and IPC

**B. FIELDS SEARCHED**

Minimum documentation searched (classification system followed by classification symbols)

IPC:B60L

Documentation searched other than minimum documentation to the extent that such documents are included in the fields searched

Electronic data base consulted during the international search (name of data base and, where practicable, search terms used)

CNABS; VEN; CNKI: 车, 转矩, 扭矩, 驱动, 调整, 调节, 滑, 轮, vehicle, torque, driv+, adjust, skid, wheel

**C. DOCUMENTS CONSIDERED TO BE RELEVANT**

| Category* | Citation of document, with indication, where appropriate, of the relevant passages | Relevant to claim No. |
| --- | --- | --- |
| X | CN 113733929 A (BEIJING ZHONGCHEN RUITONG TECHNOLOGY CO., LTD.) 03 December 2021 (2021-12-03)<br>    description, paragraphs 0079-0112, and figures 1-8 | 1-20 |
| A | CN 107953801 A (JILIN UNIVERSITY) 24 April 2018 (2018-04-24)<br>    entire document | 1-20 |
| A | CN 108944911 A (GREAT WALL MOTOR CO., LTD.) 07 December 2018 (2018-12-07)<br>    entire document | 1-20 |
| A | CN 113771644 A (EVERGRANDE HENGCHI NEW ENERGY AUTOMOBILE INSTITUTE (SHANGHAI) CO., LTD.) 10 December 2021 (2021-12-10)<br>    entire document | 1-20 |
| A | CN 113771856 A (SHANGHAI ROX INTELLIGENT TECHNOLOGY CO., LTD.) 10 December 2021 (2021-12-10)<br>    entire document | 1-20 |
| A | CN 114084140 A (GUANGZHOU XIAOPENG MOTORS TECHNOLOGY CO., LTD.) 25 February 2022 (2022-02-25)<br>    entire document | 1-20 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 August 2023** | **01 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/095326** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 116198589 A (BYD CO., LTD.) 02 June 2023 (2023-06-02)<br>entire document | 1-20 |
| A | KR 20210035967 A (HYUNDAI MOTOR CO., LTD. et al.) 02 April 2021 (2021-04-02)<br>entire document | 1-20 |

Form PCT/ISA/210 (second sheet) (July 2022)

INTERNATIONAL SEARCH REPORT
Information on patent family members

International application No.

**PCT/CN2023/095326**

| Patent document cited in search report | | | Publication date (day/month/year) | Patent family member(s) | Publication date (day/month/year) |
|---|---|---|---|---|---|
| CN | 113733929 | A | 03 December 2021 | None | |
| CN | 107953801 | A | 24 April 2018 | None | |
| CN | 108944911 | A | 07 December 2018 | None | |
| CN | 113771644 | A | 10 December 2021 | None | |
| CN | 113771856 | A | 10 December 2021 | None | |
| CN | 114084140 | A | 25 February 2022 | None | |
| CN | 116198589 | A | 02 June 2023 | None | |
| KR | 20210035967 | A | 02 April 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210551581